# FASCICULE DE BREVET EUROPEEN

(11) **EP 0 983 908 B1**
(45) Date de publication et mention de la délivrance du brevet: **18.08.2004**
(21) Numéro de dépôt: 99117179.4
(22) Date de dépôt: 01.09.1999
(51) Int. Cl.: B60R 16/02

(54) **Tablier, véhicule automobile comportant un tel tablier et procédé de montage d'un faisceau de cables mettant en oeuvre un tel tablier**
Spritzwand, Kraftfahrzeug mit einer solchen Spritzwand und Kabelbaummontageverfahren mit Verwendung einer solchen Spritzwand
Dashboard,vehicle with such a dashboard and wire harness mounting procedure using such a dashboard

(30) Priorité: 03.09.1998 FR 9811032
(43) Date de publication de la demande: 08.03.2000
(73) Titulaire: VALEO ELECTRONIQUE, 94000 Creteil (FR); VISTEON SYSTEMES INTERIEURS S.A.S., 92927 La Défense Cédex (FR)
(72) Inventeur: Renard, Alain, 78940 Millemont (FR); Nash, Andy, 78120 Clairefontaine (FR)
(74) Mandataire: Santarelli

(56) Documents cités:
- WO-A-94/19213
- US-A- 5 641 942
- US-A- 5 792 995
- PATENT ABSTRACTS OF JAPAN vol. 013, no. 206 (M-826), 16 mai 1989 (1989-05-16) & JP 01 030856 A (HONDA MOTOR CO LTD), 1 février 1989 (1989-02-01)

## Description

Les véhicules automobiles modernes sont munis de nombreux dispositifs électriques ou électroniques de mesure et/ou de commande comportant des sondes et des actionneurs disposés dans le compartiment moteur devant être reliés à des dispositifs d'affichage ou à des manettes de commande par un faisceau de câbles.

Il est habituel de percer dans le tablier séparant le compartiment moteur de l'habitacle une ouverture importante de passage d'un tel faisceau de câbles. Malheureusement, cette ouverture compromet la rigidité du tablier et favorise la propagation du bruit du compartiment moteur vers l'habitacle.

Un tel système est connu du document WO 94119213 qui décrit une paroi de séparation du compartiment moteur de l'habitacle d'un véhicule automobile et qui est munie d'une ouverture.

Cette paroi comporte des moyens de guidage à travers l'ouverture de moyens d'interconnexion entre des organes disposés dans le compartiment moteur et ceux disposés dans l'habitacle.

Les moyens de guidage obturent complètement l'ouverture pratiquée dans la paroi.

En variante, il est également connu de disposer sur le tablier un connecteur assurant la continuité électrique entre un premier faisceau disposé dans le compartiment moteur et un faisceau correspondant disposé dans l'habitacle. Le coût important d'un connecteur ne permet pas la mise en oeuvre systématique de cette solution.

C'est par conséquent un but de la présente invention d'offrir des moyens d'interconnexion des organes, notamment électriques et/ou électroniques disposés dans le compartiment moteur d'un véhicule automobile avec ceux disposés dans l'habitacle, notamment au niveau du tableau de bord ainsi qu'autour de la colonne de direction.

C'est également un but de la présente invention d'offrir de tels moyens d'interconnexion dont la présence a une incidence nulle ou faible sur la rigidité du tablier séparant le compartiment moteur de l'habitacle.

C'est aussi un but de la présente invention d'offrir de tels moyens ne compromettant pas l'isolation acoustique de l'habitacle par rapport au compartiment moteur.

C'est également un but de la présente invention d'offrir de tels moyens présentant un faible coût de revient.

Ces buts sont atteints selon la présente invention grâce à des moyens de guidage d'un faisceau de câbles d'interconnexion, notamment électriques, qui sont disposés à travers une ouverture pratiquée dans le tablier et destinée à assurer l'entrée d'air dans l'habitacle (ouverture de ventilation, de chauffage et/ou de climatisation).

La présente invention a principalement pour objet un tablier selon la revendication 1.

L'invention a aussi pour objet un tablier caractérisé en ce que l'ouverture comporte une extrémité arrondie assurant le passage dudit faisceau de câbles.

L'invention a également pour objet un tablier, caractérisé en ce que les moyens de guidage du faisceau de câbles assurent le guidage du faisceau de câbles selon un chemin tangentiel au tablier sur ses deux faces opposées.

L'invention a aussi pour objet un tablier, caractérisé en ce que les moyens de guidage du faisceau de câbles ont une forme en U.

L'invention a également pour objet un tablier, caractérisé en ce que les moyens de guidage du faisceau de câbles assurent la protection contre des entrées d'eau dans l'habitacle.

L'invention a aussi pour objet un tablier, caractérisé en ce que les moyens de guidage du faisceau de câbles ont la forme d'une gouttière renversée.

L'invention a également pour objet un véhicule automobile caractérisé en ce qu'il comporte un tel tablier et en ce que le faisceau de câbles assure l'interconnexion entre des dispositifs électriques ou électroniques, de mesure et/ou de commande disposés dans le compartiment moteur à des moyens d'affichage ou des moyens de commande disposés dans l'habitacle.

L'invention a aussi pour objet un procédé de montage d'un faisceau de câbles dans un véhicule automobile comportant un tablier selon la revendication 1, caractérisé en ce qu'il comporte une étape d'introduction et de fixation sur une ouverture d'un ensemble formé par des moyens de guidage d'un faisceau de câbles et des moyens de maintien dans une condition enroulée d'une partie dudit faisceau de câbles suivie par une étape de déroulement de la partie enroulée du faisceau de câbles et par une étape de connexion des divers câbles à leur organe de mesure ou de commande.

L'invention a aussi pour objet un procédé caractérisé en ce que les moyens de maintien d'une partie enroulée du faisceau de câbles comporte un boîtier.

La présente invention sera mieux comprise au moyen de la description ci-après et des figures annexées données comme des exemples non limitatifs et sur lesquels :
- la figure 1 est une vue schématique de face d'une ouverture dans le tablier équipée d'un dispositif selon la présente invention ;
- la figure 2 est une vue de dessus en plan du dispositif de la figure 1 ;
- la figure 3 est une vue selon III-III du dispositif de la figure 1 ;
- la figure 4 est une vue selon IV-IV illustrant une étape intermédiaire d'un procédé de montage d'un faisceau de câbles selon la présente invention ;
- la figure 5 est une vue de dessus du dispositif de la figure 4.

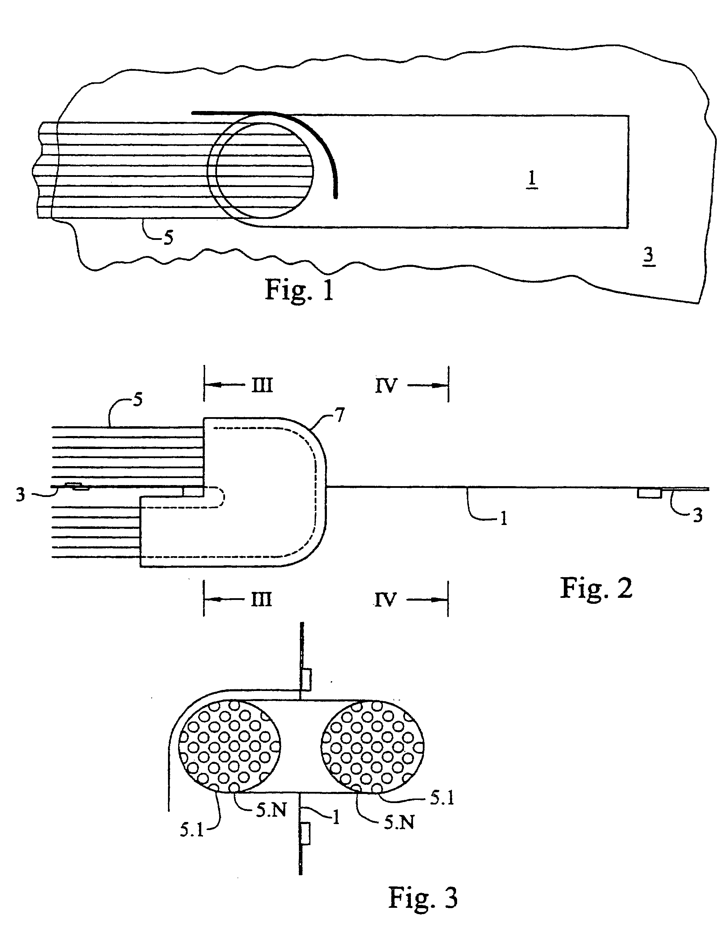

Sur les figures 1 à 5, on a utilisé les mêmes références pour désigner les mêmes éléments.

Sur les figures 1 à 3, on peut voir une ouverture 1 d'entrée d'air pratiquée dans un tablier 3, typiquement réalisé en tôle d'acier, d'un véhicule automobile. L'exemple d'ouverture 1 illustré a une forme rectangulaire allongée, arrondie à l'une des extrémités. Le rayon de courbure de cet arrondi est légèrement supérieur au rayon d'un faisceau 5 de câbles 5.1 à 5.N regroupant avantageusement tous les câbles de communication d'informations, d'alimentation électrique et/ou d'interconnexion des éléments présents dans le compartiment moteur avec les éléments disposés dans l'habitacle tels que afficheurs, commutateurs, rhéostats ou analogues. Le faisceau 5 comporte principalement des câbles électriques isolés, étant bien entendu que d'autres types de câbles comme par exemple les fibres optiques, les câbles coaxiaux ou analogues peuvent être incorporés dans le faisceau 5. De préférence, le faisceau 5 est tangent au tablier 3 sur ses deux faces opposées et traverse l'ouverture 1 au niveau de son extrémité arrondie.

Avantageusement, un dispositif 7 assure le guidage et la protection du faisceau 5 au niveau de sa traversée de l'ouverture 1 ainsi que la protection contre la pénétration de l'eau dans l'habitacle. La pièce de protection et de guidage 7 a avantageusement la forme d'une gouttière renversée, suivant le chemin, par exemple en U, du câble, et étant disposée à cheval dans le compartiment moteur et dans l'habitacle. La pièce 7 assure le guidage du faisceau de câbles, de préférence tangentiellement au tablier 3, évite la coupure d'un câble lors d'une traction sur le faisceau 5, et évite que le faisceau 5 soit replié selon un rayon de courbure incompatible avec son fonctionnement correct.

Il est bien entendu que d'autres formes de pièce 7, comme par exemple des formes tubulaires en U ou autres, ne sortent pas du cadre de la présente invention. La pièce de protection des moyens de guidage 7 est avantageusement réalisée en matière plastique, par exemple moulée par injection. Elle est fixée sur le tablier 3 par collage, insertion à force, rivetage, vissage, agrafage ou analogue.

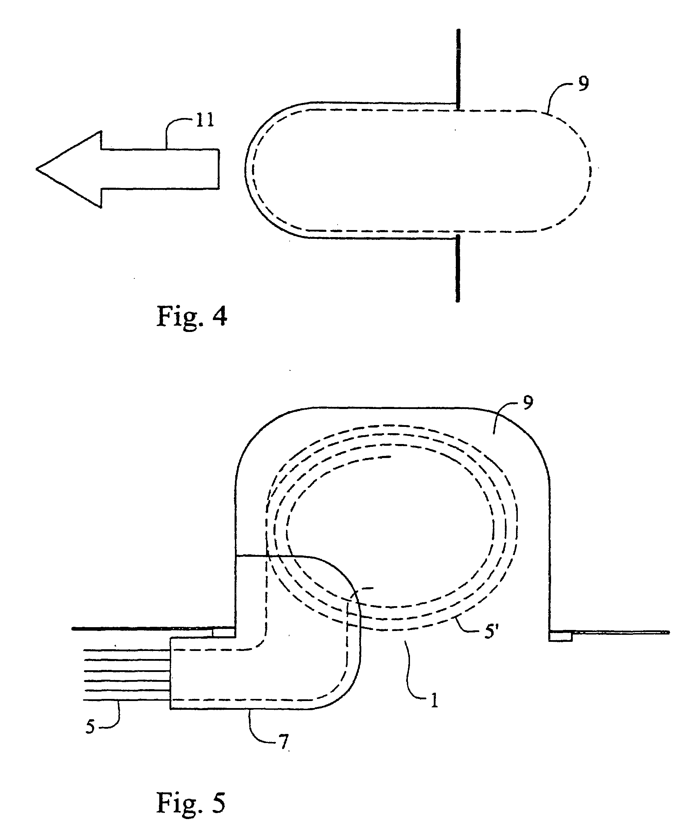

Sur les figures 4 à 5, on peut voir un dispositif selon la présente invention ménagé dans une entrée d'air dans l'habitacle d'un dispositif de chauffage et/ou de climatisation. Ce dispositif comporte d'une part, une pièce 7 de guidage du faisceau de câbles au niveau du passage de l'ouverture 1 dans le tablier 3 formant ladite entrée d'air et, d'autre part, un boîtier 9 intégré ou reporté recevant le faisceau 5 dans une condition enroulée, référencée 5', lors de l'installation de l'appareil de chauffage ou de climatisation sur le véhicule. A partir de cette position, le faisceau sera déroulé et les connexions désirées établies lors d'une étape ultérieure de montage du véhicule. Le boîtier 9 de réception du faisceau 5' enroulé est déposé ultérieurement au déroulement du faisceau 5. Le boîtier 9 muni d'un élément de guidage 7 et garni avec le faisceau 5, 5' est inséré selon la flèche 11, par exemple à partir du compartiment moteur vers l'habitacle. La forme du boîtier 9 est d'une part adaptée à recevoir le faisceau enroulé et, d'autre part, à la forme de l'ouverture 1.

Dans l'exemple non illustré sur les figures 4 et 5, le boîtier 9 a une forme aplatie et arrondie.

La présente invention s'applique à l'industrie automobile.

## Revendications

1. Tablier (3) destiné à séparer un compartiment moteur d'un véhicule automobile de l'habitacle de ce dernier, ledit tablier étant muni d'une ouverture (1) et comportant des moyens de guidage (7) à travers cette ouverture de moyens d'interconnexion (5) entre des organes disposés dans le compartiment moteur et des organes disposés dans l'habitacle, **caractérisé en ce que** l'ouverture (1) est une ouverture d'entrée d'air destinée à assurer l'entrée d'air dans l'habitacle, les moyens de guidage (7) étant disposés à travers cette ouverture et assurant le guidage d'un faisceau (5) de câbles d'interconnexion (5.1, 5.N).

2. Tablier selon la revendication 1, **caractérisé en ce que** l'ouverture 1 comporte une extrémité arrondie assurant le passage dudit faisceau (5) de câbles (5.1, 5.N)

3. Tablier selon l'une quelconque des revendications précédentes, **caractérisé en ce que** les moyens (7) de guidage du faisceau (5) de câbles (5.1, 5.N) assurent le guidage du faisceau (5) de câbles (5.1, 5.N) selon un chemin tangentiel au tablier (1) sur ses deux faces opposées.

4. Tablier selon l'une des revendications précédentes, **caractérisé en ce que** les moyens de guidage (7) du faisceau (5) de câbles (5.1, 5.N) ont une forme en U.

5. Tablier selon l'une quelconque des revendications précédentes, **caractérisé en ce que** les moyens de guidage (7) du faisceau (5) de câbles (5.1, 5.N) assurent la protection contre des entrées d'eau dans l'habitacle.

6. Tablier selon la revendication 5, **caractérisé en ce que** les moyens (7) de guidage du faisceau (5) de câbles (5.1, 5.N) ont la forme d'une gouttière renversée.

7. Véhicule automobile **caractérisé en ce qu'**il comporte un tablier (3) selon l'une quelconque des revendications précédentes et **en ce que** le faisceau (5) de câbles assure l'interconnexion entre des dispositifs électriques ou électroniques, de mesure et/ou de commandé disposés dans le compartiment moteur et des moyens d'affichage ou des moyens de commande disposés dans l'habitacle.

8. Procédé de montage d'un faisceau (5) de câbles (5.1, 5.N), dans un véhicule automobile comportant un tablier (3) selon la revendication 1, **caractérisé en ce qu'**il comporte une étape d'introduction 11 et de fixation sur l'ouverture (1) d'un ensemble formé par les moyens (7) de guidage d'un faisceau (5) de câbles (5.1, 5.N) et des moyens (9) de maintien dans une condition enroulée d'une partie (5') dudit faisceau (5) de câbles suivie par une étape de déroulement de la partie enroulée (5') du faisceau (5) de câbles et par une étape de connexion des divers câbles (5.1, 5.N) à leur organe de mesure ou de commande.

9. Procédé de montage d'un faisceau de câbles selon la revendication 8, **caractérisé en ce que** les moyens (9) de maintien d'une partie enroulée (5') du faisceau (5) de câbles (5.1, 5.N) comportent un boîtier.

## Patentansprüche

1. Stirnwand (3), die dazu bestimmt ist, einen Motorraum eines Kraftfahrzeugs vom Fahrgastraum des letzteren zu trennen, wobei die Stirnwand mit einer Öffnung (1) versehen ist und Mittel (7) zum Führen von Verbindungsmitteln (5) zwischen in dem Motorraum angeordneten Organen und in dem Fahrgastraum angeordneten Organen durch diese Öffnung umfasst, **dadurch gekennzeichnet, dass** die Öffnung (1) eine Lufteinlassöffnung ist, die dazu bestimmt ist, den Lufteintritt in den Fahrgastraum zu gewährleisten, wobei die Führungsmittel (7) durch diese Öffnung verlaufend angeordnet sind und die Führung eines Strangs (5) von Verbindungskabeln (5.1, 5.N) gewährleisten.

2. Stirnwand nach Anspruch 1, **dadurch gekennzeichnet, dass** die Öffnung (1) ein abgerundetes Ende aufweist, das den Durchgang des Strangs (5) von Kabeln (5.1, 5.N) gewährleistet.

3. Stirnwand nach einem der vorhergehenden Ansprüche, **dadurch gekennzeichnet, dass** die Mittel (7) zum Führen des Strangs (5) von Kabeln (5.1, 5.N) die Führung des Strangs (5) von Kabeln (5.1, 5.N) längs eines zur Stirnwand (1) tangentialen Wegs auf deren zwei gegenüberliegenden Flächen gewährleisten.

4. Stirnwand nach einem der vorhergehenden Ansprüche, **dadurch gekennzeichnet, dass** die Mittel (7) zum Führen des Strangs (5) von Kabeln (5.1, 5.N) eine U-Form besitzen.

5. Stirnwand nach einem der vorhergehenden Ansprüche, **dadurch gekennzeichnet, dass** die Mittel (7) zum Führen des Strangs (5) von Kabeln (5.1, 5.N) den Schutz vor einem Eintreten von Wasser in den Fahrgastraum gewährleisten.

6. Stirnwand nach Anspruch 5, **dadurch gekennzeichnet, dass** die Mittel (7) zum Führen des Strangs (5) von Kabeln (5.1, 5.N) die Form einer umgedrehten Regenrinne haben.

7. Kraftfahrzeug, **dadurch gekennzeichnet, dass** es eine Stirnwand (3) nach einem der vorhergehenden Ansprüche umfasst und dass der Kabelstrang die Verbindung zwischen elektrischen oder elektronischen Mess- und/oder Steuervorrichtungen, die im Motorraum angeordnet sind, und Anzeigemitteln oder Steuermitteln, die im Fahrgastraum angeordnet sind, gewährleistet.

8. Verfahren zur Montage eines Strangs (5) von Kabeln (5.1, 5.N) in einem Kraftfahrzeug, das eine Stirnwand (3) nach Anspruch 1 umfasst, **dadurch gekennzeichnet, dass** es einen Schritt des Einführens (11) und des Befestigens einer Baueinheit, die durch die Mittel (7) zum Führen eines Strangs (5) von Kabeln (5.1, 5.N) und durch Mittel (9), die einen Teil (5') des Kabelstrangs (5), in einem aufgewickelten Zustand halten, gebildet ist, in die bzw. an der Öffnung (1) umfasst, gefolgt von einem Schritt des Abwickelns des aufgewickelten Teils (5') des Kabelstrangs (5) und von einem Schritt des Verbindens verschiedener Kabel (5.1, 5.N) an ihrem Mess- oder Steuerorgan.

9. Verfahren zur Montage eines Kabelstrangs nach Anspruch 8, **dadurch gekennzeichnet, dass** die Mittel (9) zum Halten eines aufgewickelten Teils (5') des Strangs (5) von Kabeln (5.1, 5.N) ein Gehäuse umfassen.

## Claims

1. A bulkhead (3) adapted to separate an engine compartment of an automotive vehicle from the passenger compartment of the latter, said bulkhead being provided with an opening (1) and comprising guide means (7) for guiding through the opening means (5) for interconnecting devices arranged in the engine compartment with devices arranged in the passenger compartment, **characterized in that** the opening (1) is an air inlet opening adapted to let in air to the passenger compartment, the guide means (7) being arranged through the opening and guiding a bundle (5) of interconnection cables (5.1, 5.N).

2. A bulkhead according to claim 1, **characterized in that** the opening 1 comprises a rounded end ensuring the passage of said bundle (5) of cables (5.1, 5.N).

3. A bulkhead according to any one of the preceding claims, **characterized in that** the guide means (7) for guiding the bundle (5) of cables (5.1, 5.N) guides the bundle (5) of cables (5.1, 5.N) along a path tangential to the bulkhead (1) on its two opposite faces.

4. A bulkhead according to one of the preceding claims, **characterized in that** the guide means (7) for guiding the bundle (5) of cables (5.1, 5.N) is U-shaped.

5. A bulkhead according to any one of the preceding claims, **characterized in that** the guide means (7) for guiding the bundle (5) of cables (5.1, 5.N) protects against the ingress of water into the passenger compartment.

6. A bulkhead according to claim 5, **characterized in that** the guide means (7) for guiding the bundle (5) of cables (5.1, 5.N) has the form of a gutter tipped over.

7. An automotive vehicle **characterized in that** it comprises a bulkhead (3) according to any one of the preceding claims and **in that** the bundle (5) of cables interconnects electrical or electronic devices for measurement and/or control arranged in the engine compartment with display means or control means arranged in the passenger compartment.

8. A method for mounting a bundle (5) of cables (5.1, 5.N) in an automotive vehicle comprising a bulkhead (3) according to claim 1, **characterized in that** it comprises a step (11) of introducing and fixing, onto the opening (1), an assembly formed by the guide means (7) for guiding a bundle (5) of cables (5.1, 5.N) and means (9) for holding a portion (5') of said bundle (5) of cables in a rolled up condition, followed by a step of unrolling the rolled up portion (5') of the bundle (5) of cables and by a step of connecting the various cables (5.1, 5.N) to their measuring or control device.

9. A method for mounting a bundle of cables according to claim 8, **characterized in that** the means (9) for holding a rolled up portion (5') of the bundle (5) of cables (5.1, 5.N) comprises a casing.
